**Europäisches Patentamt**

**European Patent Office**

**Office européen des brevets**

(11) Veröffentlichungsnummer: **0 402 493**

**A1**

# EUROPÄISCHE PATENTANMELDUNG

(21) Anmeldenummer: **89110622.1**

(22) Anmeldetag: **12.06.89**

(51) Int. Cl.5: **F16C 29/06**

(43) Veröffentlichungstag der Anmeldung:
**19.12.90 Patentblatt 90/51**

(84) Benannte Vertragsstaaten:
**AT BE CH DE ES FR GB IT LI NL SE**

(71) Anmelder: **V M E I "LENIN"**
**Studentsko Gradche "Hr.Botev"**
**Sofia(BG)**

(72) Erfinder: **Milanov, Boris Dobrev**
**Suhodolska St., Bl.54-2**
**Sofia(BG)**
Erfinder: **Yakimov, Dimiter Irinov, Dipl.-Ing.**

**Zvetna Gradina St. 67A**
**Sofia(BG)**
Erfinder: **Milanov, Stefan Borissov**
**Komplex Serdika, Bl. 15-D**
**Sofia(BG)**
Erfinder: **Yanakieva, Elena Stankova, Dipl.-Ing.**
**Zvetna Gradina St. 67A**
**Sofia(BG)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **Lineares Lager.**

(57) Das Lager für lineare Bewegungen entlang von Achsen mit rundem Querschnitt besteht aus einer zylindrischen Hülse (1), einer einstückigen Kassette (2) und aus Kugelketten (19), die in ununterbrochenen Zweiwege-Laufkanälen (8) angeordnet sind. Diese Zweiwege-Laufkanäle (8) sind in den Wänden (7) der Kassette (2) ausgearbeitet. Die nichtarbeitenden Abschnitte (22) der Kugelketten (19) sind in der Nähe der Kanten (10) der Kassette (2) längs dieser Kanten (10) angeordnet. Die äußere Oberfläche (24) der Kassette (2) ist von der eine identische geometrische Form aufweisenden inneren Oberfläche (23) der Hülse (1) umgeben.

Fig. 1

## Lineares Lager

Die Erfindung betrifft ein lineares Lager, insbesondere Lager für lineare Bewegungen entlang von Achsen mit rundem Querschnitt, bestehend aus einer äußeren zylindrischen Hülse, aus einer einstückigen, wenigstens drei äußere in Kanten aneinandergrenzende Wände aufweisenden prismatischen Kassette, die in die Hülse eingefügt ist, und aus Kugelketten, die mit einem arbeitenden und einem nichtarbeitenden Abschnitt in ununterbrochenen Zweiwege-Laufkanälen angeordnet sind.

Bei einem solchen bekannten linearen Lager (GB-13 70 730), das im Maschinenbau, im Gerätebau, in der Robottechnik und in anderen Industriezweigen eingesetzt wird, sind in der Kassette und in der Hülse Ausnehmungen zur Bildung der ununterbrochenen Zweiwege-Laufkanäle ausgebildet, die mit eine Kugelkette bildenden Kugeln gefüllt sind. Die Kugelkette hat einen arbeitenden und einen nichtarbeitenden Abschnitt, die in den Wänden der prismaförmigen Kassette liegen. In dem arbeitenden Abschnitt hat der Kanal eine Tiefe, die dem Kugeldurchmesser entspricht. Der nichtarbeitende Abschnitt der Kugelkette befindet sich im Bereich der Kassettenkante, wo die Kanaltiefe geringer ist, was durch eine V-förmige Nut kompensiert wird, die in der inneren zylindrischen Wand der Hülse ausgearbeitet ist, und zwar gegenüber der geometrischen Position der Kassettenkanten. Dadurch befindet sich der eine Zweig des ununterbrochenen Zweiwege-Laufkanals vollständig in der Wand der Kassette, während sein anderer Zweig zum Teil in der Wand der Kassette und zum Teil in der sie umgebenden Hülse mit der V-förmigen Nut vorgesehen ist. Dadurch ist die Form der beiden Zweige des Zweiwege-Laufkanals unterschiedlich. Ferner ist an der Stelle, wo die Kugelkette von dem einen Zweig in den anderen Zweig des Zweiwege-Laufkanals übergeht, also am Übergang vom arbeitenden zum nichtarbeitenden Abschnitt und umgekehrt, eine Übergangsstufe ausgebildet, damit die Kugeln in die V-förmige Nut der Hülse gelangen können, wo sie sich nichtarbeitend bewegen. Bei dieser Ausführung sind die Kugelketten mit ihrem nichtarbeitenden und ihrem arbeitenden Abschnitt auf zwei verschiedenen Niveaus angeordnet.

Aufgrund der beschriebenen Anordnung der Kanäle für die Kugelketten in dem bekannten linearen Lager ist die Tragfähigkeit seiner Kugelketten beschränkt und deshalb die Lebensdauer des linearen Lagers entsprechend kurz. Außerdem ist die Ausbildung der Übergangsstufen zwischen dem arbeitenden und dem nichtarbeitenden Bereich der Kugeln der Kugelketten aufwendig. Das bekannte lineare Lager ist außerdem nicht gegen ein Überdrehen und Gleiten der Kassette bezüglich der Hülse gesichert. Wenn ein solches Überdrehen oder Gleiten stattfindet, übernehmen die in der V-förmigen Nut der Hülse befindlichen Kugeln die einwirkenden Kräfte, was nachteilig ist. Die Fertigung ist insgesamt aufgrund der Vielzahl von einzusetzenden Werkzeugen sehr aufwendig. Durch die unterschiedlichen geometrischen Formen der äußeren Oberfläche der Kassette und der inneren Oberfläche der Hülse, die einander zuge ordnet sind, ergibt sich ein überflüssiges Spiel, wodurch die Abmessungen des Lagers vergrößert werden.

Die der Erfindung zugrunde liegende Aufgabe besteht nun darin, das lineare Lager der gattungsgemäßen Art so auszugestalten, daß bei einer Sicherung gegenüber Drehen und Gleiten der Kassette in der Hülse, bei einfachem Aufbau und einfacher Herstellung eine hohe Tragfähigkeit und lange Lebensdauer bei gleichbleibenden Abmessungen gewährleistet ist.

Diese Aufgabe wird ausgehend von dem linearen Lager der gattungsgemäßen Art dadurch gelößt, daß die ununterbrochenen Zweiwege-Laufkanäle ganz in den Wänden der Kassette in gleicher Tiefe für den ganzen Zweiwege-Laufkanal ausgearbeitet sind, so daß die darin angeordneten Kugelketten in den Wänden der Kassette auf gleichem Niveau liegen, daß die nichtarbeitenden Abschnitte der Kugelketten in der Nähe der Kanten der Kassette und entlang dieser Kanten angeordnet sind, daß sich auf beiden Seiten jeder Kante je ein nichtarbeitender Abschnitt der Kugelketten befindet und daß die arbeitenden Abschnitte in der Nähe einer Längssymmetrielinie der Wände der Kassette angeordnet sind, deren äußere Oberfläche von der eine dazu identische geometrische Form aufweisenden inneren Oberfläche der Hülse umgeben ist.

Die Kugelketten liegen somit vollständig in den Wänden der Kassette. Im Bereich der arbeitenden Abschnitte der Kugelkette sind die Kanäle offen, so daß der Arbeitskontakt zwischen den Kugeln und der daran angreifenden Achse gewährleistet ist. Zweckmäßigerweise sind die Kugelketten von den ebenen Bereichen der identischen Wände der inneren Oberfläche der Hülse überdeckt.

Vorteilhafterweise enthält jede Wand der Kassette mindestens eine Kugelkette, wobei zur Verminderung der Außenabmessungen des linearen Lagers die Kanten der Kassette abgeschrägt sein können.

Dadurch, daß mehr als eine Kugelkette in jede seitliche Wand der prismaförmigen Kassette eingebaut werden kann, kann die Tragfähigkeit des Lagers erheblich gesteigert werden. Die Identität der geometrischen Form der ineinander eingeschriebenen Oberflächen, nämlich der äußeren Oberfläche der Kassette und der inneren Oberfläche der Hülse macht ein Überdrehen oder Gleiten zwischen Hülse und Kassette unmöglich, während ein guter Kontakt zwischen diesen Oberflächen gewährleistet ist und die Außenabmessungen des Lagers reduziert werden können. Die Ausarbeitungen der beiden Abschnitte der Kanäle für die Kugelketten mit gleicher Tiefe und gleicher Form vereinfacht die Herstellung. Da die Kugelketten in der gleichen Ebene, also in der Kassettenwand angeordnet sind, ist eine Übergangsstufe am Übergang der Kugeln vom arbeitenden in den nichtarbeitenden Zustand nicht mehr nötig. Das erfindungsgemäße lineare Lager hat einen einfachen Aufbau, ist einfach herstellbar und läßt sich bequem montieren und demontieren.

Anhand von Zeichnungen werden Ausführungsbeispiele der Erfindung näher erläutert. Es zeigt:

Fig. 1 perspektivisch das lineare Lager auseinandergezogen,

Fig. 2 eine Draufsicht auf eine Wand der Kassette mit einer Kugelkette,

Fig. 3 eine Draufsicht auf eine Wand der Kassette mit zwei Kugelketten, und

Fig. 4 einen Querschnitt durch ein Lager mit einer Kassette mit abgeschrägten Kanten.

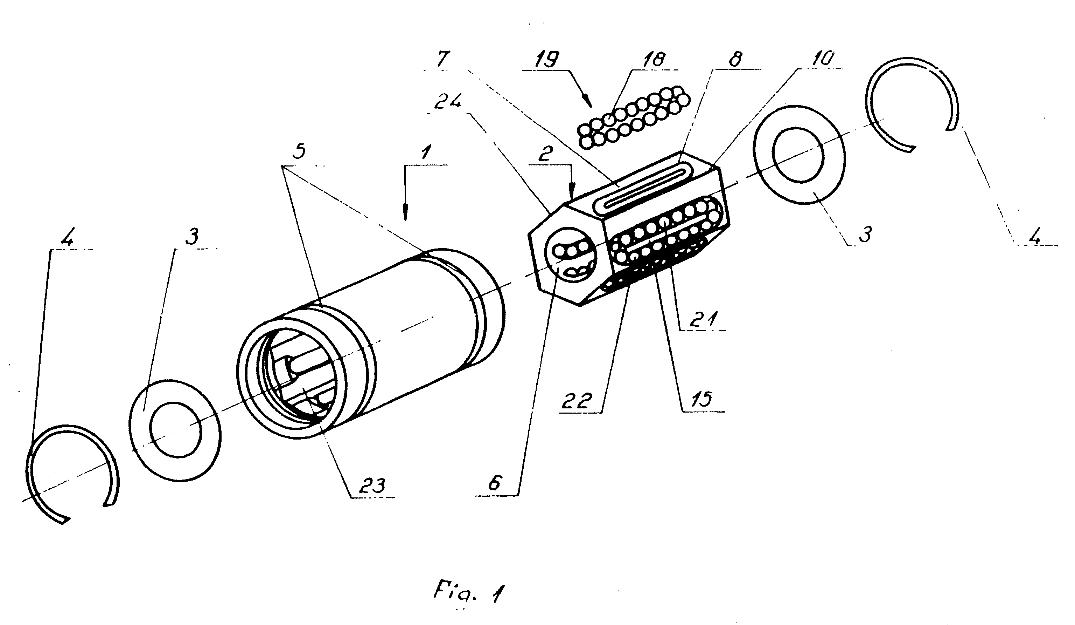

Das in Fig. 1 gezeigte lineare Lager besteht aus einer äußeren zylindrischen Hülse 1 und aus einer ein Stück bildenden Kassette 2, die koaxial zur Hülse 1 ist und in diese beim Zusammenbau des Lagers eingeschoben wird. Die Kassette 2 wird in der Hülse 1 durch Begrenzungsscheiben 3 und Sperringe 4 fixiert. Für eine Begrenzung des linearen Lagers in Betrieb sind in die äußere Oberfläche der zylindrischen Hülse 1 in deren Endbereich Nuten 5 ausgespart.

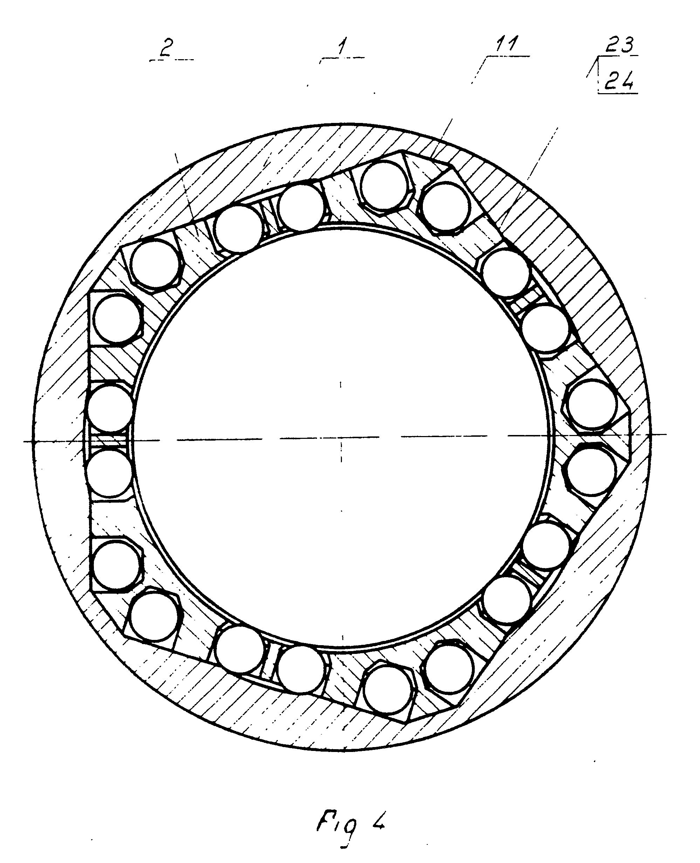

Die Kassette 2 hat die Form eines Prismas, das bei der Ausführungsform von Fig. 1 sechs und bei der Ausführungsform von Fig. 4 fünf seitliche Wände 7 aufweist. Die optimale Anzahl der seitlichen Wände 7 der Kassette 2 liegt abhängig vom Durchmesser der mit dem linearen Lager zusammenwirkenden Achse zwischen drei und zwölf. Für Achsen mit einem Durchmesser, der kleiner als 20 mm ist, hat die Kassette 2 drei bis sechs Wände 7, für Achsen mit einem Durchmesser, der größer ist als 20 mm, beträgt die Anzahl der Wände 7 der Kassette 2 fünf bis zwölf. Die seitlichen Wände 7 der prismaförmigen Kassette 2 grenzen in Kanten 10 aneinander.

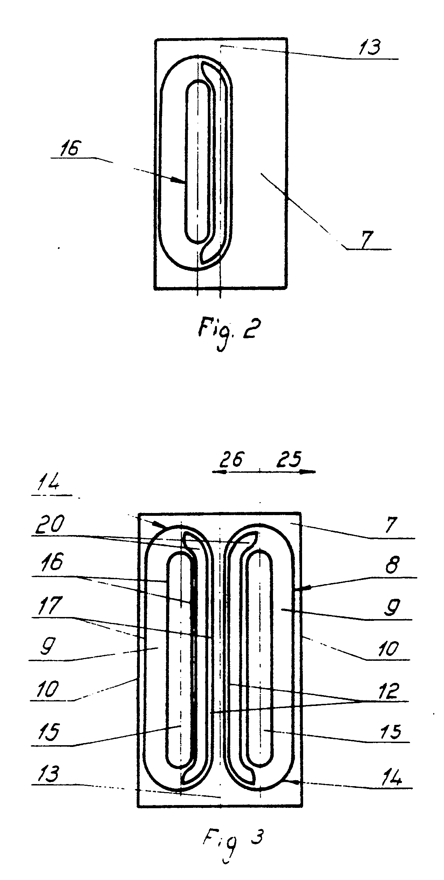

Die Kassette 2 hat, wie in Fig. 1 gezeigt ist, eine zentrale Öffnung 6 mit kreisförmigem Querschnitt für die Aufnahme einer zylindrischen Achse. In jeder Wand 7 der ein Stück bildenden prismaförmigen Kassette 2 ist mindestens ein unnterbrochener Zweiwege-Laufkanal 8 ausgearbeitet, der sich in Längsrichtung der Wand 7 erstreckt. Dieser Zweiwege-Laufkanal 8 hat einen ersten linearen Abschnitt 9 (Fig. 2 und 3), der sich in der Nähe der Kante 10 längs dieser Kante 10 erstreckt, und einen zweiten linearen Abschnitt 12, dessen Anordnung von der Gesamtzahl der Zweiwege-Laufkanäle 8 in der zugehörigen Wand 7 abhängt. Wenn jeder seitlichen Wand 7 nur ein Zweiwege-Laufkanal 8 zugeordnet ist, ist der zweite lineare Abschnitt 12 auf der Symmetrielängsachse 13 der Wand 7 angeordnet, wie dies in Fig. 2 gezeigt ist. Wenn jeder seitlichen Wand 7 der Kassette 2 zwei Zweiwege-Laufkanäle 8 zugeordnet werden, werden die zweiten linearen Abschnitte 12 in der Nähe der Symmetrielängsachse 13 jeder seitlichen Wand 7 symmetrisch zu beiden Seiten dieser Symmetrielängsachse 13 angeordnet, wie dies in Fig. 3 gezeigt ist. Die beiden linearen Abschnitte 9 und 12 sind an ihren beiden Enden durch kreisförmige Abschnitte 14 verbunden und werden voneinander durch einen vorspringenden Teil 15 getrennt, der eine innere Wand 16 des Zweiwege-Laufkanals 8 bildet. Der Zweiwege-Laufkanal 8 hat eine äußere Wand 17, die durch die Dicke der seitlichen Wand 7 der Kassette 2 vorgegeben ist. Die Höhe des vorspringenden Teils 15 entspricht der der seitlichen Wand 7.

Jeder ununterbrochene Zweiwege-Laufkanal 8 ist mit dicht aneinander angeordneten Kugeln 18 gefüllt, wie dies in Fig. 1 gezeigt ist, die eine Kugelkette 19 bilden. Der Durchmesser der Kugeln 18 ist von der Größe des Zweiwege-Laufkanals 8 und somit von der Typengröße des linearen Lagers abhängig. Diese Typengrößen sind für Achsdurchmesser von 5 mm bis 150 mm vorgesehen.

Der ununterbrochene Zweiwege-Laufkanal 8 kann auch als ein aus zwei Zweigen bestehender Kanal angesehen werden, wobei der eine Zweig 25 für den Leerlauf und der andere Zweig 26 für den Arbeitslauf der Kugelkette 19 vorgesehen ist. Dabei ist der Kanalboden des einen Zweiges 25 für den Leerlauf massiv, während ein solcher Kanalboden bei dem Zweig 26 für den Arbeitslauf fehlt, d.h. statt dessen ist eine durchgehende Öffnung 20 vorgesehen.

Der eine Zweig 25 für den Arbeitslauf bildet also einen arbeitenden Abschnitt 21 der Kugelkette 19, weil auf seiner Längserstreckung die Kugelkette 19 durch die durchgehende Öffnung 20 mit der zugehörigen zylindrischen Achse in Kontakt steht, während der andere Zweig 26 einen nichtarbeitenden Abschnitt 22 darstellt, wobei sich die Kugeln 18 der Kugelkette 19 durch die jeweiligen Abschnitte bewegen, da der Zweiwege-Laufkanal 8 endlos ausgebildet ist.

Sowohl der arbeitende Abschnitt 21 als auch der nichtarbeitende Abschnitt 22 der Kugelkette 19 befinden sich auf dem gleichen Niveau, wobei sich der unterschiedliche Abstand dieser Abschnitte 21 und 22 von der zylindrischen Achse durch das Austragen der Kugelkette 19 bzw. durch den ununterbrochenen Zweiwege-Laufkanal 8 in der Nähe der Kante 10 der Kassette 2 ergibt. Auf diese Weise ist jeder Kante 10 der in einem Stück ausgebildeten prismaförmigen Kassette 2 auf beiden Seiten ein nichtarbeitender Abschnitt 22 der Kugelketten 19 zugeordnet.

Bei der in Fig. 4 gezeigten Modifizierung sind die Kanten 10 der Kassette 2 abgeschrägt bzw. abgeflacht. Durch die Ausbildung dieser Abflachungen 11 lassen sich die Außenabmessungen der Kassette 2 und somit die des gesamten linearen Lagers verringern.

Die innere Oberfläche 23 der zylindrischen Hülse 1 ist identisch zu der äußeren Oberfläche 24 der Kassette 2 ausgebildet. Auf diese Weise ist ein genaues Einpassen der beiden Oberflächen 23 und 24 sowie ein Überdecken der nichtarbeitenden Abschnitte 22 der Kugelkette 19 durch einen ebenen Teil gewährleistet, wie dies die gegenüberliegende Wand der inneren prismaförmigen Oberfläche 23 der Hülse 1 ist. Aufgrund dieses Ineinanderpassens der Oberflächen 23 und 24 ist ein Überdrehen oder Gleiten der Hülse 1 bezüglich der Kassette 2 nicht möglich.

Das erfindungsgemäße Lager läßt sich auch "gespalten" herstellen, wobei die Kassette 2 und die Hülse 1 im Bereich einer der Wände 7, wo kein Zweiwege-Laufkanal 8 vorhanden ist, durchschnitten werden.

Für die Montage auf langen Wellen läßt sich das lineare Lager "offen" bauen, wobei die zylindrische Hülse 1 und die prismaförmige Kassette 2 so verbunden sind, daß ein Metallteil aus ihnen herausgenommen ist, das eine Kugelkette enthalten hat. Diese Lagerart läßt sich bei Kassetten 2 mit drei oder vier seitlichen Wänden 7 nicht verwenden.

Für die Montage des linearen Lagers werden die ununterbrochenen Zweiwege-Laufkanäle 8 mit Kugeln 18 gefüllt. Danach wird die Kassette 2 mit den in ihr angeordneten Kugeln 18, die die Kugelketten 19 bilden, in die zylindrische Hülse 1 eingeschoben, deren innere Oberfläche 23 die komplementäre Form zu dem Prisma der Kassette 2 hat. Nach dem Einsetzen der Begrenzungsscheiben 3 und der Sperringe 4 an den Stirnseiten der Hülse 1 kann das lineare Lager auf die zylindrische Achse aufgeschoben werden. Die zylindrische Achse gelangt dabei in Kontakt mit dem arbeitenden Abschnitt 21 der Kugelkette 19, der von der durchgehenden Öffnung 20 begrenzt ist, wodurch die Achse an den Kugeln 18 gelagert ist.

## Ansprüche

1. Lineares Lager, insbesondere Lager für lineare Bewegungen entlang von Achsen mit runden Querschnitt, bestehend aus einer äußeren zylindrischen Hülse (1), aus einer einstückigen, wenigstens drei äußere, in Kanten (10) aneinandergrenzende Wände (7) aufweisenden prismatischen Kassette (2), die in die Hülse (1) eingefügt ist, und aus Kugelketten (19), die mit einem arbeitenden und einem nichtarbeitendem Abschnitt (21, 22) in ununterbrochenen Zweiwege-Laufkanälen (8) angeordnet sind, dadurch **gekennzeichnet,** daß die ununterbrochenen Zweiwege-Laufkanäle 8 ganz in den Wänden (7) der Kassette (2) in gleicher Tiefe für den ganzen Zweiwege-Laufkanal (8) ausgearbeitet sind, so daß die darin angeordneten Kugelketten (19) in den Wänden (7) der Kassette (2) auf gleichem Niveau liegen, daß die nichtarbeitenden Abschnitte (22) der Kugelketten (19) in der Nähe der Kanten (10) der Kassette (2) und entlang dieser Kanten (10) angeordnet sind, daß sich auf beiden Seiten jeder Kante (10) je ein nichtarbeitender Abschnitt (22) der Kugelketten (19) befindet und daß die arbeitenden Abschnitte (21) in der Nähe einer Längssymmetrielinie (13) der Wände (7) der Kassette (2) angeordnet sind, deren äußere Oberfläche (24) von der eine dazu identische geometrische Form aufweisenden inneren Oberfläche (23) der Hülse (1) umgeben ist.

2. Lineares Lager nach Anspruch 1, dadurch **gekennzeichnet,** daß die Kugelketten (19) von den ebenen Bereichen der identischen Wände der inneren Oberfläche (23) der Hülse (1) überdeckt sind.

3. Lineares Lager nach Anspruch 1 oder 2, dadurch **gekennzeichnet,** daß jede Wand (7) der Kassete (2) mindestens eine Kugelkette (19) enthält und daß die Kanten (10) der Kassette (2) angeschrägt sind.

Fig. 1

Fig. 2

Fig 3

2       1       11    23 / 24

Fig 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 030 076 (DEUTSCHE STAR KUGELHALTER) <br> * Insgesamt * <br> --- | 1 | F 16 C 29/06 |
| A | FR-A-2 337 280 (SKF) <br> ----- | | |

**RECHERCHIERTE SACHGEBIETE (Int. Cl.5)**

F 16 C

Der vorliegende Recherchenbericht wurde für alle Patentansprüche erstellt

| Recherchenort | Abschlußdatum der Recherche | Prüfer |
|---|---|---|
| DEN HAAG | 25-01-1990 | BEGUIN C.P. |